# EUROPÄISCHE PATENTSCHRIFT

(11) **EP 4 529 596 B1**
(45) Veröffentlichungstag und Bekanntmachung des Hinweises auf die Patenterteilung: **29.04.2026**
(21) Anmeldenummer: 23722416.7
(22) Anmeldetag: 04.05.2023
(51) Int. Cl.: F16H 57/04, F16H 47/06

(54) **GETRIEBE UND ANTRIEBSSTRANG**
TRANSMISSION AND POWERTRAIN
TRANSMISSION ET GROUPE MOTOPROPULSEUR

(30) Priorität: 23.05.2022 DE 102022205091
(43) Veröffentlichungstag der Anmeldung: 02.04.2025
(73) Patentinhaber: ZF Friedrichshafen AG, 88046 Friedrichshafen (DE)
(72) Erfinder: FRITSCHLE, Ulrich, 88069 Tettnang (DE)
(74) Vertreter: ZF Friedrichshafen AG
(86) Internationale Anmeldenummer: PCT/EP2023/061735
(87) Internationale Veröffentlichungsnummer: WO 2023/227343

(56) Entgegenhaltungen:
- DE-A1- 102016 212 369
- DE-A1- 102018 219 151
- US-A- 4 495 830

## Beschreibung

Die vorliegende Erfindung betrifft ein Getriebe, insbesondere ein Fahrzeuggetriebe, welches einen hydrodynamischen Drehmomentwandler und ein Ölversorgungssystem mit einem Ölsumpf umfasst.

Aus der DE 10 2016 212 369 A1 ist ein Getriebe mit einer Antriebswelle, einer Abtriebswelle und mit Getriebeelementen, die in einem Getriebegehäuse zur Realisierung verschiedener Übersetzungsverhältnisse zwischen der Getriebeeingangswelle und der Abtriebswelle angeordnet sind, bekannt. Dabei ist auf der Abtriebswelle ein Förderrad angeordnet, mit dem das Abtriebswellenlager aus einem Ölsumpf mit Schmieröl versorgt wird. Das auf der Abtriebswelle angeordnete Förderrad dreht sich so bald die Abtriebswelle rotiert. Dabei nimmt das Förderrad nach dem bekannten Prinzip der Tauchschmierung aus dem Ölsumpf Schmieröl mit, welches zu dem Abtriebswellenlager gefördert wird.

Auf diese Weise wird das Abtriebswellenlager mithilfe des Förderrads mit Schmieröl versorgt, wenn die Abtriebswelle rotiert. Damit kann die Schmierung des Getriebeausgangswellenlager s auch dann erfolgen, wenn eine Druckschmiereinrichtung mit einer Ölpumpe, die von der Antriebswelle des Getriebes angetrieben wird, nicht funktioniert, weil die Antriebswelle stillsteht. Situationen, in denen die Antriebswelle stillsteht und die Abtriebswelle rotiert, entstehen beispielsweise beim Abschleppen eines Fahrzeugs. Es hat sich in der Praxis jedoch herausgestellt, dass die Schmierung mithilfe des Förderrads in bestimmten Betriebsphasen keine ausreichende Menge an Schmieröl fördern kann.

Ferner ist aus der DE 10 2018 219 151 A1 ein Getriebe mit einem hydrodynamischen Retarder und mit einem Betriebsmittelkreislauf bekannt, bei dem ein Wärmetauscher zur Kühlung eines Betriebsmittels des Getriebes und eines hydrodynamischen Drehmomentwandlers vorgesehen ist. In dem Betriebsmittelkreislauf ist nach dem Drehmomentwandler ein Wandlergegendruckventil angeordnet, über das ein Druck nach dem Drehmomentwandler eingestellt wird. Überschreitet der Druck nach dem Drehmomentwandler einen vorbestimmten Druckwert, dann öffnet das Wandlergegendruckventil, so dass Betriebsmittel des Automatgetriebes in Richtung eines Kühlkreislaufs bzw. Schmierkreislaufs abfließen kann.

Es ist die Aufgabe der vorliegenden Erfindung ein Getriebe mit einem verbesserten Ölversorgungssystem sowie einen Antriebsstrang mit einem solchen Getriebe zu schaffen.

Diese Aufgabe wird durch ein Getriebe gemäß Anspruch 1 und durch einen Antriebsstrang gemäß Anspruch 5 gelöst. Vorteilhafte Ausführungen sind in den abhängigen Ansprüchen angegeben.

Es wird ein Getriebe vorgeschlagen, welches ein Getriebegehäuse, einen hydrodynamischen Drehmomentwandler, eine Getriebeeingangswelle und eine Getriebeausgangswelle, sowie Getriebeelemente zum Einstellen verschiedener Übersetzungsverhältnisse zwischen der Getriebeeingangswelle und der Getriebeausgangswelle umfasst. Der genannte Drehmomentwandler weist ein Wandlergehäuse auf, das zumindest teilweise mit Öl gefüllt ist. Dazu ist der Drehmomentwandler an ein Ölversorgungssystem des Getriebes angeschlossen. Das Ölversorgungssystem umfasst auch einen Ölsumpf. Das Wandlergehäuse kann insbesondere ein Pumpenrad des hydrodynamischen Drehmomentwandlers umfassen, wobei das Pumpenrad von der Getriebeeingangswelle angetrieben wird.

Das Getriebe umfasst ferner ein Wandlerentleerventil, durch das Öl aus dem Wandlergehäuse in den Ölsumpf abgeleitet werden kann. Darüber hinaus kann durch das Wandlerentleerventil auch Öl aus den genannten Getriebeelementen und Druckölkanälen in den Ölsumpf abgeleitet werden. Dies hat den Vorteil, dass in bestimmten Betriebsphasen das in dem Wandlergehäuse befindliche Öl schnell in den Ölsumpf abgeleitet werden kann und der Ölpegel in dem Ölsumpf dabei schnell ansteigt. Ein Teil der Schmierung in dem Getriebe erfolgt zumindest zeitweise über eine Tauchschmierung. Bei der Tauchschmierung taucht ein rotierendes Getriebeelement in den Ölsumpf ein, nimmt Öl aus dem Ölsumpf mit und transportiert das Öl zu einer höheren Stelle in dem Getriebe. Je höher nun der Ölpegel in dem Ölsumpf ist, desto mehr Öl kann bei der Tauchschmierung befördert werden. Folglich wird, durch das nach dem Öffnen des Wandlerentleerventils schnell aus dem Wandlergehäuse in den Ölsumpf entleerte Öl, die Schmierung und Kühlung in dem Getriebe verbessert.

Im Normalbetrieb des Getriebes, das heißt bei angetriebener Getriebeeingangswelle, ist der hydrodynamische Drehmomentwandler im Betrieb und das Wandlergehäuse ist zumindest nahezu mit Öl gefüllt. Im Normalbetrieb kann zudem über die Getriebeeingangswelle eine Ölpumpe des Ölversorgungssystems angetrieben werden, welche die Getriebeelemente über ein Druckölsystem mit Öl versorgt. Dabei ist der Ölpegel in dem Ölsumpf niedrig, weil sich ein großer Anteil des Öls in Druckölkanälen, im Wandlergehäuse und an anderen Stellen in dem Getriebe befindet. Die Getriebeelemente sind über das Druckölsystem ausreichend mit Öl versorgt. Sobald jedoch die Getriebeeingangswelle nicht mehr angetrieben wird, insbesondere, wenn ein damit verbundener Antriebsmotor ausgeschaltet wird, dann fördert auch die genannte Ölpumpe kein Öl mehr und das Druckölsystem versorgt keine Getriebeelemente mehr mit Öl. In dieser Betriebsphase ist die Tauchschmierung wichtig, um trotzdem eine ausreichende Ölversorgung der Getriebeelemente und Lagerstellen sicherzustellen. Die genannte Ölpumpe kann insbesondere über ein auf der Getriebeeingangswelle oder über ein an dem Pumpenrad befestigtes Zahnrad angetrieben werden.

Bei Fahrzeugen mit mehreren Antriebssträngen, beispielsweise in Schienenfahrzeugen, können Antriebsmotoren einzelner Antriebsstränge während einer Fahrt im Teillastbetrieb abgeschaltet sein, sodass bei dem zugeordneten Getriebe die Getriebeeingangswelle stillsteht, während die Getriebeausgangswelle von der Abtriebsseite her angetrieben wird. Auch im sogenannten Segelbetrieb, bei dem der Antriebsmotor abgeschaltet wird, während das Fahrzeug unter Nutzung der vorliegenden Bewegungsenergie weiterfährt, wird die Getriebeausgangswelle von der Abtriebsseite her angetrieben, während die Getriebeeingangswelle stillsteht. Die Rahmenbedingungen bestehen auch beim Abschleppen eines Fahrzeugs mit einem derartigen Getriebe.

In solchen Betriebsphasen ist es wichtig, dass eine Lagerstelle der Getriebeausgangswelle in dem Getriebegehäuse weiterhin mit Öl versorgt wird um Folgeschäden durch Trockenlauf und/oder Überhitzung zu vermeiden. Die erforderliche Ölversorgung kann in diesen Betriebsphasen mangels angetriebener Ölpumpe nur durch die Tauchschmierung erfolgen. Die Wirksamkeit der Tauchschmierung hängt von dem Ölpegel im Ölsumpf ab und kann folglich durch das Öffnen des Wandlerentleerventils erhöht werden. Besonders anschaulich wird dies bei einem Getriebe, welches als Teil der Tauchschmierung ein Förderrad aufweist, welches zur Mitnahme von Öl in den Ölsumpf eintaucht. Ein solches Getriebe ist beispielsweise in der eingangs genannten DE 10 2016 212 369 A1 beschrieben. Dabei kann die Tauchschmierung mithilfe der hier vorgeschlagenen Anordnung eines Wandlerentleerventils deutlich verbessert werden.

Das Wandlerentleerventil kann in einem Ölkanal angeordnet sein, der einen Innenraum des Wandlergehäuses mit dem Ölsumpf verbindet. Das Wandlerentleerventil ist dadurch so angeordnet, dass das aus dem Wandlergehäuse durch das Wandlerentleerventil abfließende Öl unmittelbar in den Ölsumpf abfließen kann.

Der Anteil der in dem Wandlergehäuse befindlichen Ölmenge an der gesamten Ölmenge in dem Getriebe ist verhältnismäßig hoch, sodass das aus dem Wandlergehäuse zurückfließende Öl den Ölpegel im Ölsumpf beachtlich ansteigen lässt. Dies gilt selbst dann, wenn ein Restanteil des Öls in einem unteren Bereich des Wandlergehäuses verbleibt. Zusätzlich kann durch das Wandlerentleerventil auch Öl aus Druckölkanälen und den Getriebeelementen in den Ölsumpf abfließen. Besonders wirksam ist der durch das Wandlerentleerventil erreichte Effekt bei niedrigen Temperaturen, weil das Öl dann zähflüssiger ist und ohne dem Wandlerentleerventil nur sehr langsam aus dem Wandlergehäuse und aus den Getriebeelementen in den Ölsumpf zurücklaufen würde.

Das Wandlerentleerventil kann vorzugsweise in Abhängigkeit eines Öldrucks öffnen und schließen. Der Öldruck zum Schließen des Wandlerentleerventils wird von einer über die Getriebeeingangswelle antreibbaren Ölpumpe generiert. Das Wandlerentleerventil weist ferner eine Feder auf, die das Wandlerentleerventil öffnet, wenn der genannte Öldruck unter einem bestimmten Grenzwert liegt.

Auf diese Weise kann ein Antriebsstrang mit einem Antriebsmotor und mit einem Getriebe geschaffen werden, bei dem der Antriebsmotor mit der Getriebeeingangswelle antriebswirksam verbunden ist und bei dem der Grenzwert durch eine bestimmte Federkraft der Feder so eingestellt ist, dass das Wandlerentleerventil bei einem Stopp des Antriebsmotors geöffnet und bei einem Start des Antriebsmotors durch den Öldruck wieder geschlossen wird. Es läuft dabei folgende Wirkungskette ab.

Während des Normalbetriebs treibt der laufende Antriebsmotor die Getriebeeingangswelle, die damit verbundene Ölpumpe und das Pumpenrad des hydrodynamischen Drehmomentwandlers an, sodass das Druckölsystem mit ausreichendem Öldruck betrieben und die Getriebeelemente mit Öl versorgt werden. Das Wandlergehäuse und andere Teile des Druckölsystems sind zu diesem Zeitpunkt zumindest nahezu mit Öl gefüllt. Der Ölpegel im Ölsumpf ist daher niedrig und die Tauchschmierung fördert höchstens eine begrenzte Menge an Öl. Mit dem Abschalten des Antriebsmotors wird die Getriebeeingangswelle nicht mehr angetrieben, wodurch auch die Ölpumpe nicht mehr angetrieben wird und der Öldruck in dem Druckölsystem unter den Grenzwert an dem Wandlerentleerventil sinkt. Beim Unterschreiten des Grenzwerts öffnet die Feder das Wandlerentleerventil und ein erheblicher Anteil des Öls aus dem Wandlergehäuse fließt durch das offene Wandlerentleerventil in den Ölsumpf, sodass der Ölpegel im Ölsumpf steigt und die Tauchschmierung ausreichend viel Öl fördert, um zumindest die noch rotierenden Getriebeelemente zu Schmieren und zu Kühlen. Vorzugsweise soll der Grenzwert so bestimmt sein, dass das Wandlerentleerventil bei jedem Stopp des Antriebsmotors geöffnet und bei jedem Start des Antriebsmotors durch den Öldruck wieder geschlossen wird.

Im Folgenden werden die Erfindung und deren Vorteile anhand des Ausführungsbeispiels in der anliegenden Figur noch näher erläutert.

Dabei zeigen
Fig. 1 eine schematische Darstellung eines mit einem erfindungsgemäßen Getriebe ausgestatteten Antriebsstrangs;
Fig. 2 eine schematische Schnittdarstellung eines erfindungsgemäßen Getriebes und
Fig. 3 einen Ausschnitt des Getriebes aus Figur 2 mit einem Wandlerentleerventil in einer Schnittdarstellung.

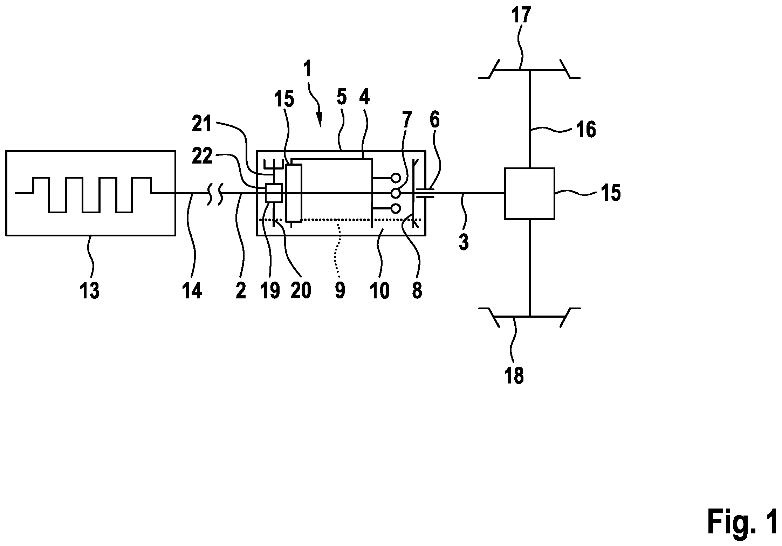

Der in der Fig. 1 gezeigte Antriebsstrang wird durch einen Antriebsmotor 13, beispielsweise ein Verbrennungsmotor, angetrieben. Eine Motorabtriebswelle 14 des Antriebsmotors 13 ist mit einer Getriebeeingangswelle 2 verbunden.

In einem Getriebegehäuse 5 des Getriebes 1 ist an der Getriebeeingangswelle 2 ein hydrodynamischer Drehmomentwandler 15 angekoppelt. Zur Realisierung verschiedener Übersetzungsverhältnisse zwischen der Getriebeeingangswelle 2 und der Getriebeausgangswelle 3 sind miteinander zusammenwirkende Getriebeelemente 4 in dem Getriebegehäuse 5 angeordnet. Diese Getriebeelemente 4 sind der Übersichtlichkeit halber in Fig. 1 lediglich als ein Rechteck dargestellt. Die Getriebeausgangswelle 3 ist mittels eines Getriebeausgangswellenlagers 6 in dem Getriebegehäuse 5 gelagert.

In dem Getriebegehäuse 5 ist darüber hinaus ein Druckölsystem 22 angeordnet. Das Druckölsystem 22 umfasst eine Ölpumpe 19, die über die Getriebeeingangswelle 2 antreibbar ist. Die Ölpumpe 19 wird von der Getriebeeingangswelle 2 über ein Zahnrad angetrieben. Die Ölpumpe 19 saugt durch eine Saugleitung 20 Öl aus dem Ölsumpf 10 und fördert es über Druckleitungen 21 zu verschiedenen Schmierstellen in dem Getriebe 1. Es gibt Betriebsphasen, in denen die Getriebeeingangswelle 2 stillsteht, das Fahrzeug fährt und die Getriebeausgangswelle 3 rotiert. Dies ist beispielsweise in einem Segelbetrieb oder beim Abschleppen des Fahrzeugs der Fall. Die Triebverbindung zwischen der Getriebeeingangswelle 2 und der Getriebeausgangswelle 3 ist in einer solchen Betriebsphase getrennt. Bei Stillstand der Getriebeeingangswelle 2 ist das von der Getriebeeingangswelle 2 antreibbare Druckölsystem 22 außer Betrieb. Die rotierende Getriebeausgangswelle 3 bzw. deren Getriebeausgangswellenlager 6 müssen aber weiterhin mit Öl versorgt werden, um Schäden an dem Getriebeausgangswellenlager 6 zu vermeiden. Diese Ölversorgung wird mithilfe eines Förderrads 8 nach dem Prinzip der Tauchschmierung bewirkt.

Die Getriebeausgangswelle 3 treibt über ein Achsgetriebe 15 eine Radachse 16 des Fahrzeugs, vorliegend ein Schienenfahrzeug, an. Auf der Radachse 16 sind zwei Schienenräder 17 und 18 befestigt, mit denen das Schienenfahrzeug auf Schienen rollt und angetrieben wird.

Das Getriebe 1 umfasst zumindest eine Schaltkupplung 7, mit der eine Triebverbindung zwischen den Getriebeelementen 4 und der Getriebeausgangswelle 3 wahlweise herstellbar oder trennbar ist.

Das Förderrad 8 ist auf der Getriebeausgangswelle 3 angeordnet. Mit dem Förderrad 8 wird das Getriebeausgangswellenlager 6 zumindest zeitweise mit Öl aus einem Ölsumpf 10 versorgt. Der Ölsumpf 10 bildet an seiner Oberfläche in dem Getriebegehäuse 5 einen Ölpegel 9 aus. Der Ölpegel 9 wird so eingestellt, dass zumindest der Außenumfang des Förderrades 8 mit den daran angeordneten Ölaufnahmeelementen 17 in den Ölsumpf 10 eintaucht, sodass bei Rotation des Förderrades 8 Öl aus dem Ölsumpf 10 mitgenommen, d.h. gefördert wird. Dreht sich die Getriebeausgangswelle 3, dann fördert das mit der Getriebeausgangswelle 3 rotierende Förderrad 8 Öl nach oben, von wo es zu dem Getriebeausgangswellenlager 6 gelangt.

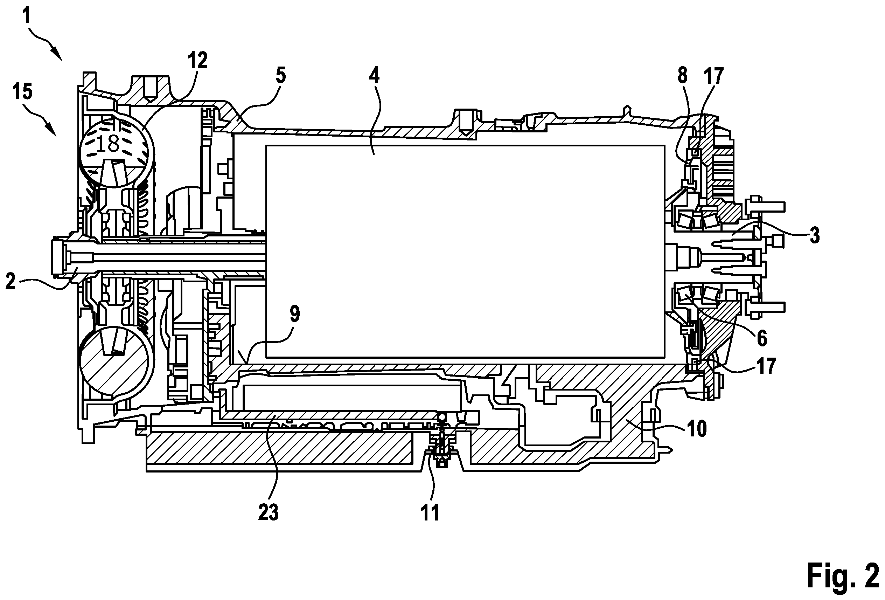

In der Fig. 2 ist das Getriebe 1 mit weiteren Einzelheiten gezeigt. Das Getriebe 1 umfasst eine Getriebeeingangswelle 2 und eine Getriebeausgangswelle 3. Über die Getriebeeingangswelle 2 ist das Getriebe 1 mit einem Antriebsmotor 13 verbindbar. In dem Getriebegehäuse 5 sind Getriebeelemente 4 angeordnet, zum Einstellen verschiedener Übersetzungsverhältnisse zwischen der Getriebeeingangswelle 2 und der Getriebeausgangswelle 3. Die Getriebeelemente 4 sind der Einfachheit halber lediglich schematisch in Form eines Rechtecks dargestellt.

Das Getriebe 1 umfasst ferner einen hydrodynamischen Drehmomentwandler 15. Ein Pumpenrad des Drehmomentwandlers 15 ist mit der Getriebeeingangswelle 2 verbunden. Der Drehmomentwandler 15 weist ein Wandlergehäuse 12 auf, welches teilweise von dem Pumpenrad des Drehmomentwandlers 15 gebildet wird. Das Wandlergehäuse 12 umschließt einen Innenraum 18 des Drehmomentwandlers 15. Das Wandlergehäuse 12, das heißt der Innenraum 18 ist teilweise mit Öl gefüllt, was in der Fig. 2 durch eine Schraffur gezeigt ist.

Im unteren Bereich des Getriebes 1 bzw. des Getriebegehäuses 5 ist ein Ölsumpf 10 angeordnet. In Abhängigkeit von der jeweils im Ölsumpf 10 befindlichen Ölmenge liegt der Ölpegel 9 in dem Getriebe 1 höher oder tiefer.

Das Getriebe 1 umfasst ein Wandlerentleerventil 11, durch das Öl aus dem Wandlergehäuse 12 in den Ölsumpf 10 abgeleitet wird, wenn das Wandlerentleerventil 11 offen ist. Dadurch wird der Ölpegel 9 des Ölsumpfs 10 angehoben und die Tauchschmierung mittels des Förderrads 8 wird wirksam oder verstärkt seine Wirksamkeit. Das Förderrad 8 weist mehrere Ölaufnahmeelemente 17 auf, die beim Rotieren des Förderrads 8 in den Ölsumpf 10 eintauchen, dabei Öl aufnehmen und es im weiteren Verlauf zu einer höher gelegenen Stelle in dem Getriebe 1 fördern, von wo das Öl zu den Schmierstellen in dem Getriebe 1 läuft. Die Ölaufnahmeelemente 17 sind einfache Ausnehmungen am äußeren Umfang des Förderrads 8.

Das Wandlerentleerventil 11 ist in einem Ölkanal 23 angeordnet, der den Innenraum 18 des Wandlergehäuses 12 mit dem Ölsumpf 10 verbindet. In dem vorliegenden Ausführungsbeispiel ist das Wandlerentleerventil 11 im unteren Bereich des Getriebegehäuses 5 am Ende des Ölkanals 23 im Bereich des Ölsumpfes 10 angeordnet.

Das Wandlerentleerventil 11 öffnet und schließt in Abhängigkeit eines Öldrucks, welcher auf der dem Drehmomentwandler 15 zugeordneten Seite des Wandlerentleerventils 11 ansteht. Im Normalbetrieb wird das Wandlerentleerventil 11 durch einen Öldruck geschlossen gehalten, wobei der Öldruck von einer über die Getriebeeingangswelle 2 antreibbaren Ölpumpe 19 generiert wird.

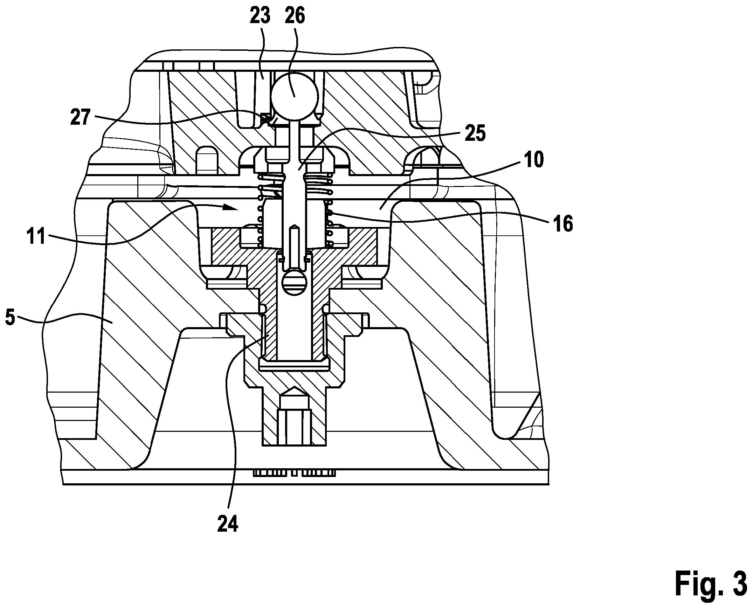

In der Fig. 3 ist das in dem Getriebe 1 eingebaute Wandlerentleerventil 11 vergrößert in der geöffneten Stellung dargestellt. Das Wandlerentleerventil 11 ist in dem vorliegenden Ausführungsbeispiel als Kugelventil ausgeführt. Eine Ventilkugel 26 verschließt dabei einen Ventilsitz 27, wenn das Wandlerentleerventil 11 geschlossen ist. Eine Feder 16 des Wandlerentleerventils 11 sorgt dafür, dass das Wandlerentleerventil 11 geöffnet wird, wenn der genannte Öldruck unter einem Grenzwert sinkt. Dann wird der Durchfluss frei, weil die Kraft der Feder 16 ausreicht, um die Ventilkugel 26 mithilfe eines Ventilkolbens 25 aus dem Ventilsitz 27 zu heben. Bei geöffnetem Wandlerentleerventil 11 kann Öl aus dem Wandlergehäuse 12 durch das Wandlerentleerventil 11 in den Ölsumpf 10 abfließen.

Ein Ventilkolben 25 ist verschiebbar in einem Ventilkörper 24 angeordnet. Die Feder 16 des Wandlerentleerventils 11 drückt den Ventilkolben 25 und die Ventilkugel 26 nach oben in die geöffnete Stellung, solange die durch den statischen und dynamischen Druck verursachte Gegenkraft geringer ist als die Federkraft.

Sobald bei angetriebener Getriebeeingangswelle 2 die Ölpumpe 19 einen Öldruck aufbaut, beginnt Öl in dem Ölkanal 23 in Richtung des Ölsumpfs 10 durch das Wandlerentleerventil 11 zu strömen. Der dabei sich aufbauende dynamische Druck im Bereich des Wandlerentleerventils 11 bewirkt, dass der Ventilkolben 25 entgegen der Federkraft der Feder 16 nach unten verschoben wird. Folglich bewegt sich auch die Ventilkugel 26 nach unten, bis sie den Ventilsitz 27 verschließt. Damit ist das Wandlerentleerventil 11 geschlossen. Durch die Bestimmung einer geeigneten Federkraft der Feder 16 kann ein Grenzwert so eingestellt werden, dass das Wandlerentleerventil 11 bei einem Stopp eines mit dem Getriebe 1 verbundenen Antriebsmotors 13 geöffnet und bei einem Start des Antriebsmotors 13 wieder geschlossen wird.

### Bezugszeichen

- 1: Getriebe
- 2: Getriebeeingangswelle
- 3: Getriebeausgangswelle
- 4: Getriebeelemente
- 5: Getriebegehäuse
- 6: Getriebeausgangswellenlager
- 7: Schaltkupplung
- 8: Förderrad
- 9: Ölpegel
- 10: Ölsumpf
- 11: Wandlerentleerventil
- 12: Wandlergehäuse
- 13: Antriebsmotor
- 14: Motorabtriebswelle
- 15: Drehmomentwandler
- 16: Feder
- 17: Ölaufnahmeelement
- 18: Innenraum
- 19: Ölpumpe
- 20: Saugleitung
- 21: Druckleitungen
- 22: Druckölsystem
- 23: Ölkanal
- 24: Ventilkörper
- 25: Ventilkolben
- 26: Ventilkugel
- 27: Ventilsitz

## Patentansprüche

1. Getriebe (1)
• mit einem Getriebegehäuse (5),
• mit einem hydrodynamischen Drehmomentwandler (15), der ein Wandlergehäuse (12) aufweist, welches zumindest teilweise mit Öl gefüllt ist,
• mit einer Getriebeeingangswelle (2) und einer Getriebeausgangswelle (3),
• mit Getriebeelementen (4) zum Einstellen verschiedener Übersetzungsverhältnisse zwischen der Getriebeeingangswelle (2) und der Getriebeausgangswelle (3), und
• mit einem Ölversorgungssystem, umfassend einen Ölsumpf (10),
wobei das Getriebe (1) ein Wandlerentleerventil (11) aufweist, durch das Öl aus dem Wandlergehäuse (12) in den Ölsumpf (10) abgeleitet werden kann, **dadurch gekennzeichnet, dass** ein Öldruck zum Schließen des Wandlerentleerventils (11) von einer über die Getriebeeingangswelle (2) antreibbaren Ölpumpe (19) generiert wird, und dass das Wandlerentleerventil (11) eine Feder (16) aufweist, die das Wandlerentleerventil (11) öffnet, wenn der genannte Öldruck unter einem Grenzwert liegt.

2. Getriebe (1) nach Anspruch 1, **dadurch gekennzeichnet, dass** das Wandlerentleerventil (11) in einem Ölkanal (23) angeordnet ist, der einen Innenraum (18) des Wandlergehäuses (12) mit dem Ölsumpf (10) verbindet.

3. Getriebe (1) nach Anspruch 1 oder 2, **dadurch gekennzeichnet, dass** das Wandlerentleerventil (11) in Abhängigkeit eines Öldrucks öffnet und schließt.

4. Getriebe (1) nach einem der Ansprüche 1 bis 3, **dadurch gekennzeichnet, dass** das Getriebe (1) ein Förderrad (8) mit zumindest einem Ölaufnahmeelement (17) aufweist.

5. Antriebsstrang mit einem Antriebsmotor (13) und mit einem Getriebe (1) nach Anspruch 4, wobei der Antriebsmotor (13) mit der Getriebeeingangswelle (2) antriebswirksam verbunden ist, **dadurch gekennzeichnet, dass** der Grenzwert durch eine bestimmte Federkraft der Feder (16) so eingestellt ist, dass das Wandlerentleerventil (11) bei einem Stopp des Antriebsmotors (13) geöffnet und bei einem Start des Antriebsmotors (13) durch den Öldruck wieder geschlossen wird.

## Claims

1. Transmission (1)
• having a transmission housing (5),
• having a hydrodynamic torque converter (15) which has a converter housing (12) which is filled at least partially with oil,
• having a transmission input shaft (2) and a transmission output shaft (3),
• having transmission elements (4) for setting different transmission ratios between the transmission input shaft (2) and the transmission output shaft (3), and
• having an oil-supply system which comprises an oil sump (10),
wherein the transmission (1) has a converter emptying valve (11) by way of which oil can be discharged from the converter housing (12) into the oil sump (10), **characterized in that** an oil pressure for closing the converter emptying valve (11) is generated by an oil pump (19) which is able to be driven via the transmission input shaft (2), and **in that** the converter emptying valve (11) has a spring (16) which opens the converter emptying valve (11) if said oil pressure is below a limit value.

2. Transmission (1) according to Claim 1, **characterized in that** the converter emptying valve (11) is arranged in an oil channel (23) which connects an interior space (18) of the converter housing (12) to the oil sump (10).

3. Transmission (1) according to Claim 1 or 2, **characterized in that** the converter emptying valve (11) opens and closes in a manner dependent on an oil pressure.

4. Transmission (1) according to one of Claims 1 to 3, **characterized in that** the transmission (1) has a conveying wheel (8) with at least one oil-receiving element (17).

5. Drive train having a drive motor (13) and having a transmission (1) according to Claim 4, wherein the drive motor (13) is connected operatively in terms of drive to the transmission input shaft (2), **characterized in that** the limit value is set by a particular spring force of the spring (16) in such a way that the converter emptying valve (11) is opened when the drive motor (13) is stopped and is closed again by the oil pressure when the drive motor (13) is started.

## Revendications

1. Transmission (1)
• avec un carter de transmission (5),
• avec un convertisseur de couple de rotation hydrodynamique (15), qui comporte un carter de convertisseur (12) qui est rempli d'huile au moins en partie,
• avec un arbre d'entrée (2) de transmission et un arbre de sortie (3) de transmission,
• avec des éléments (4) de transmission destinés à régler différents rapports de transmission entre l'arbre d'entrée (2) de transmission et l'arbre de sortie (3) de transmission, et
• avec un système d'alimentation en huile comprenant un carter d'huile (10),
la transmission (1) comportant une soupape de vidange (11) de convertisseur, par laquelle de l'huile peut être évacuée du carter de convertisseur (12) dans le carter d'huile (10), **caractérisée en ce qu'**une pression d'huile est générée pour fermer la soupape de vidange (11) de convertisseur par une pompe à huile (19) pouvant être entraînée par l'arbre d'entrée (2) de transmission, et que la soupape de vidange (11) de convertisseur comporte un ressort (16), qui ouvre la soupape de vidange (11) de convertisseur lorsque ladite pression d'huile est inférieure à une valeur limite.

2. Transmission (1) selon la revendication 1, **caractérisée en ce que** la soupape de vidange (11) de convertisseur est disposée dans un conduit d'huile (23), qui relie un espace intérieur (18) du carter de convertisseur (12) au carter d'huile (10).

3. Transmission (1) selon la revendication 1 ou 2, **caractérisée en ce que** la soupape de vidange (11) de convertisseur s'ouvre et se ferme en fonction d'une pression d'huile.

4. Transmission (1) selon l'une des revendications 1 à 3, **caractérisé en ce que** la transmission (1) comporte une roue transporteuse (8) avec au moins un élément de réception d'huile (17).

5. Chaîne cinématique avec un moteur d'entraînement (13) et avec une transmission (1) selon la revendication 4, le moteur d'entraînement (13) étant relié de manière active en entraînement à l'arbre d'entrée (2) de transmission, **caractérisée en ce que** la valeur limite est réglée par une force de ressort donnée du ressort (16) de telle sorte que la soupape de vidange (11) de convertisseur est ouverte lorsque le moteur d'entraînement (13) est arrêté et est refermée lorsque le moteur d'entraînement (13) est démarré par la pression d'huile.
